(19) Europäisches Patentamt
European Patent Office
Office européen des brevets

(11) Publication number: 0 103 959 A1

# (12) EUROPEAN PATENT APPLICATION

(21) Application number: 83304336.7

(22) Date of filing: 27.07.83

(51) Int. Cl.$^3$: A 46 B 13/02

(30) Priority: 20.08.82 US 410024

(43) Date of publication of application: 28.03.84 Bulletin 84/13

(84) Designated Contracting States: AT BE CH DE FR GB IT LI NL

(71) Applicant: Hegedus, Gyula
22723-38th Avenue
Langley British Columbia, V3A 5B9(CA)

(72) Inventor: Hegedus, Gyula
22723-38th Avenue
Langley British Columbia, V3A 5B9(CA)

(74) Representative: Orr, William McLean et al,
Haseltine Lake & Co Hazlitt House 28 Southampton
Buildings Chancery Lane
London WC2A 1AT(GB)

## (54) Toothbrush having rotatable brushes.

(57) A toothbrush (10) comprising at least two rotatable tooth-cleaning brushes (14), and drive means (16, 18, 20) coupled to the brushes for rotating the brushes. The brushes (14) are mounted adjacent one another and spaced sufficiently far apart to enable the brushes to be positioned on opposite sides of a tooth, for cleaning the tooth. The drive means rotates the brushes in opposite directions; preferably such that each brush rotates from the base of the tooth toward, and then over, the tooth surface. In addition to cleaning both sides of a tooth at once, the brushes massage the gums at the base of the tooth. The brushes (14) are supported at the ends of a support member (28) which facilitates correct positioning of the brushes on opposite sides of the tooth in the most effective cleaning position, while maintaining the handle in a level position for comfortable handling. A slidable guard (32) encircles the rotatable brushes on three sides to hold the cheeks and tongue away from the brushes and prevent their interfering with the tooth-brushing operation.

EP 0 103 959 A1

Croydon Printing Company Ltd.

# TOOTHBRUSH HAVING ROTATABLE BRUSHES

This invention pertains to toothbrushes and is specifically directed to a toothbrush having rotatable tooth-cleaning brushes.

Dentists and dental hygenists usually stress proper toothbrushing techniques as part-of a dental health care program. Over the short term, proper brushing techniques assist in the prevention of tooth decay through removal of foreign particulate matter from the surfaces of the teeth and from the interstices between the teeth. Over the longer term, proper brushing techniques assist in the prevention of periodontal disease through the removal of foreign matter from the gingival area and through massaging of the gingival area.

Unfortunately, it is difficult for many individuals to master the toothbrushing technique typically recommended by dentists and dental hygenists. This recommended technique requires the individual to hold the toothbrush at the base of the teeth, just above the gums, with the toothbrush bristles at about a 45° angle with respect to the teeth and at about a 135° angle with respect to the gums. While maintaining the brush in the foregoing angled position, the individual exerts a firm, but gentle pressure to guide the bristles into the gingival area and manipulates the brush in a circular or oval pattern covering the gingival area at the base of about three or four teeth. This action dislodges material trapped between the gums and the base of the teeth and also massages the gums. Periodically, the brush is drawn sharply away from the gingival area, over the surface of the teeth, to sweep away material dislodged by the circular massaging action and to remove material from the interstices between the teeth. This technique is repeated for each group of three to four teeth. Typically, about five minutes are required to properly apply the technique in cleaning all of the teeth in the mouth.

It has been found that individuals who make a conscientious effort to properly apply the prefered toothbrushing technique may still not be able to effectively clean all of their teeth. This is believed to be due to the difficulty of maintaining the preferred angled toothbrush orientation at all positions in the mouth and the difficulty of manipulating the toothbrush as described above.

The present invention provides an automatic toothbrush capable of cleaning the teeth in the gingival area, massaging the gums and cleaning the interstices between the teeth. The toothbrush is designed to "fit" over the teeth such that the brush bristles are positioned, relative to the teeth and gums, for effectively cleaning the teeth and massaging the gingival area. The user need only maintain the toothbrush handle level to ensure that the brush bristles are properly positioned to effectively clean any of the teeth in the mouth.

The invention provides a toothbrush, comprising at least two rotatable tooth-cleaning brushes and a drive means coupled to the brushes for rotating the brushes. The brushes are mounted adjacent one another and spaced sufficiently far apart to enable the brushes to be positioned on opposite sides of a tooth for cleaning the tooth. The drive means rotates the brushes in opposite directions; preferable such that each brush rotates from the base of the tooth toward, and then over, the tooth surface.

Advantageously, switch means may be provided for switching the direction of rotation of the brushes so that the brushes may be caused to rotate either from the base of the tooth toward, and then over, the tooth surface; or, from the tooth surface toward, and then over, the base of the tooth.

Preferably, the drive means rotates the brushes such that each brush massages the gums on opposite sides of the tooth.

Advantageously, a support means for supporting the brushes projects from the toothbrush handle. The support means enables the user to position the brushes on opposite sides of a tooth, while maintaining the handle in a level position for comfortably manipulating the toothbrush.

A guard is provided for holding the cheeks and tongue away from the rotatable brushes to prevent their interference with the cleaning action of the brushes.

Brief Description of the Invention

Figure 1 is a cross-sectional side elevation view of a toothbrush according to the preferred embodiment.

Figure 2 is a cross-sectional front elevation view of the toothbrush of Figure 1.

Figure 3 is a right hand end view of the toothbrush of

Figure 1.

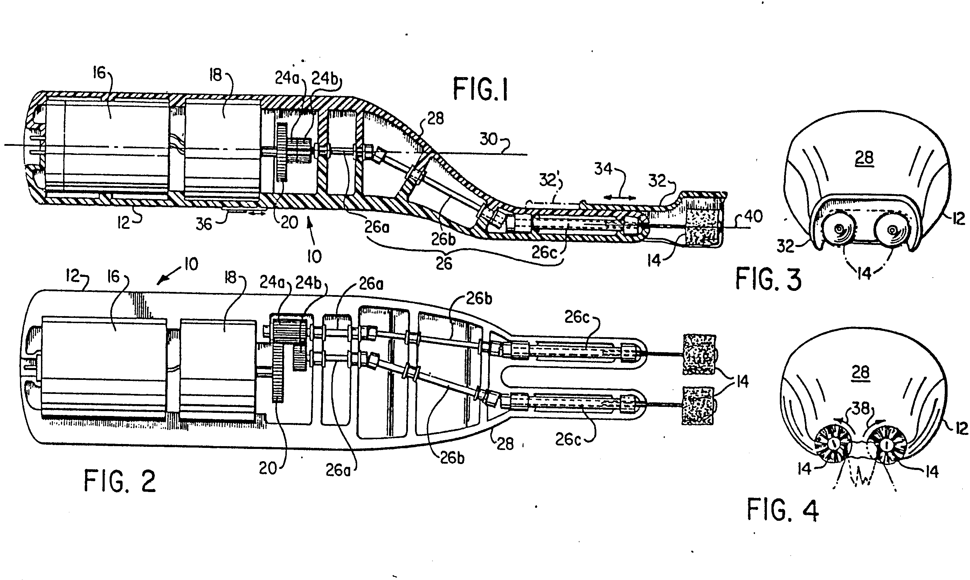

Figure 4 is similar to Figure 3, but guard 32 is removed to show how the rotatable brushes may be positioned on opposite sides of a tooth.

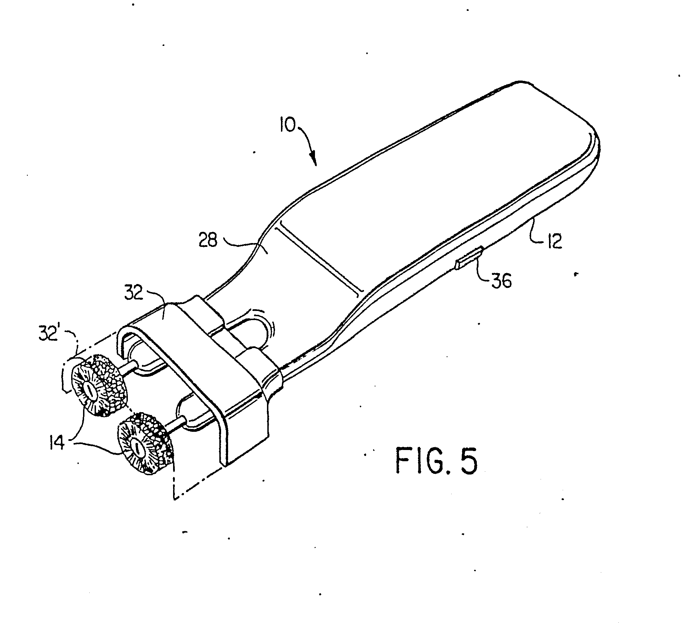

Figure 5 is a pictorial view of the toothbrush of Figures 1 and 2.

## Description of the Preferred Embodiment

Figures 1, 2 and 5 show a toothbrush, generally designated 10, having a handle 12 which encloses a drive means for rotating rotatable tooth-cleaning brushes 14.

The drive means includes a rechargeable battery 16 which powers a small electric motor 18 which, in turn, drives gear 20. The teeth of gear 20 mesh with those of intermediate drive gear 24a which, in turn, drives one of rotatable link members 26a (best shown in Figure 2). Intermediate drive gear 24a also drives gear 24b, which drives a second rotatable link member 26a in the direction opposite to the link member driven by gear 24a.

Link members 26 rotatably couple gears 24a and 24b to rotatable brushes 14, such that rotation of gears 24a and 24b causes rotation of brushes 14 in opposite directions.

Rotatable link members 26 pass through angled support member 28 formed on the end of handle 12. Link members 26 may each comprise three rotatable link sections 26a, 26b and 26c. The individual link sections 26a, 26b and 26c may be coupled together using geared drive couplings of the type commonly used in dental drills. This enables each rotatable link section to be positioned at an angle relative to the other link sections which, in turn, enables rotatable brushes 14 to be offset from the longitudinal axis 30 of handle 12, as shown in Figure 1. As an alternative to using rotatable, geared link sections 26a, 26b and 26c, short lengths of flexible, rotatable drive cable of the type commonly found in automobile speedometer drives or in flexible electric drill drives may be used to rotatable couple gears 24a and 24b to rotatable brushes 14.

As shown in Figure 2, rotatable brushes 14 project from the end of support member 28 and are spaced sufficiently far apart to enable brushes 14 to be positioned on opposite sides of a tooth. Preferably, brushes 14 should be spaced far enough apart so that they may be comfortably positioned on opposite sides of the largest molars in the mouth, with the brush bristles contacting both sides of the tooth. Brushes 14 are preferably made in a cylindrical shape, from soft, flexible material such as nylon, of the type commonly used to form the bristles of ordinary manual toothbrushes. The ends of the brush bristles should be rounded to avoid damaging the soft tissues in the mouth. Brushes 14 are preferably removably attached to support member 28 so that the brushes may be replaced as they wear out.

As shown in Figure 1, a removable guard 32 is slidably attached to the end of support member 28 for slidable manipulation, in the direction of arrows 34, between the extended position shown by the solid lines 32 and the retracted position illustrated by the hidden lines 32'. (In Figure 5, the extended position of the guard is illustrated by hidden lines 32' and the retracted position is illustrated by solid lines 32.) In the extended position, guard 32 projects over and encloses brushes 14 on three sides, leaving one side (the under, or lower side as viewed in Figures 1 or 5) open to enable positioning of brushes 14 over the teeth. In the extended position, guard 32 holds the cheeks and tongue away from the rotating brushes and thus prevents their interference with the brushes' cleaning action.

In operation, the user manipulates toothbrush 10 to position brushes 14 in his or her mouth on opposite sides of a tooth to be cleaned so that brushes 14 assume the position generally indicated in Figure 4. Slide switch 36 (Figure 5) may then be moved from the "off" to the "on" position, enabling battery 16 to power motor 18, thereby driving gears 20, 24a and 24b and link members 26 and causing brushes 14 to rotate.

Preferably, brushes 14 are rotated in opposite directions, such that each brush rotates from the base of the tooth toward, and then over, the tooth surface, in the directions of arrows 38 shown in Figure 4. Thus, brushes 14 clean the gingival area by sweeping foreign particulate matter away from the gingival area as in the brushing technique preferred by dentists and dental hygiensts. Further, the rotating brushes massage the gums on opposite sides of the tooth, which is a recognized technique for promoting healthy gum tissue and for assisting in prevention of periodontal disease.

The user slowly manipulates handle 12 to draw the rotating brushes along the tooth ridge, thereby cleaning opposite sides of each tooth at the same time and also cleaning the interstices between the teeth as the brushes are slowly drawn from one tooth to another. Of course, the toothbrush must be removed from the mouth and repositioned over the teeth in each of the four quadrants of the mouth in order to clean all of the teeth in the mouth.

If desired, slide switch 36 may have several positions for varying the speed of rotation of brushes 14. Slide switch 36 may also have a "reverse" position for reversing the direction of rotation of brushes 14 by reversing the polarity of the connection between rechargeable battery 16 and electric motor 18, thereby reversing the direction of rotation of motor 18 and causing brushes 14 to rotate from the tooth surface toward, and then over, the base of the tooth, in the directions opposite arrows 38 shown in Figure 4. This may, for example, assist in dislodging food particles trapped between the teeth and may also assist in cleaning the occlusal surfaces of the teeth. As indicated above however, brushes 14 are preferably rotated from the base of the tooth toward, and then over, the tooth surfaces in the directions of arrows 38 shown in Figure 4.

Since brushes 14 are offset, by angled support member 28 and link members 26, from the longitudinal axis 30 of handle 12 (shown in Figure 1) brushes 14 may be easily "fitted" over the tooth ridge and properly positioned for effectively cleaning the teeth and massaging the gums. Preferably, brushes 14 are positioned on opposite sides of a tooth, such that the brushes are at equal heights with respect to the tooth (as shown in Figure 4) and such that axes 40 of brushes 14 (shown in Figure 1) are perpendicular to a vertical axis of the tooth. This preferred positioning is easily achieved by fitting the brushes over the tooth ridge and holding handle 12 in a level position. Simplifying the proper positioning of brushes 14 is of importance because it ensures toothbrush 10 may be easily employed to maximum effect by small children or others who may find it awkward to properly position a conventional toothbrush for effectively cleaning the teeth and massaging the gums.

In a further embodiment, the support member 28 is removably connected to handle 12. The handle has an open end forming a socket for receiving the support member. A pair of leaf springs are connected to the inside of the handle on opposite sides. Outwardly protruding buttons connected to the leaf springs pass through slightly larger apertures in the support member to hold the support member on the handle. The buttons are pushed inwardly through the apertures and the handle and support member are pulled apart to remove the support member. This arrangement permits the entire assembly of support member, brushes and link members within the support member to be interchanged.

As will be apparent to those skilled in the art, in the light of the foregoing disclosure, many alterations and modifications are possible in the practice of this invention without departing from the spirit or scope thereof. For example, it may be desirable to place two, three or more rotatable brushes at the end of each link member 26, thereby increasing the brushes' effective cleaning area and decreasing the time required to brush the teeth. Accordingly, the foregoing description of the preferred embodiment is not to be taken as limiting the scope of the invention. The scope of the invention is to be construed in accordance with the substance defined by the following claims.

CLAIMS:

1. A toothbrush, comprising:

(a) at least two rotatable tooth-cleaning brushes; and,

(b) drive means coupled to said brushes for rotating said brushes.

2. A toothbrush as claimed in claim 1, wherein said brushes are mounted adjacent one another and spaced sufficiently far apart to enable said brushes to be positioned on opposite sides of a tooth, for cleaning the tooth, and said drive means rotates said brushes in opposite directions such that each of said brushes rotates from the base of the tooth toward, and then over, the tooth surface.

3. A toothbrush as claimed in claim 2, further comprising switch means for switching the direction of rotation of said brushes to cause each of said brushes to rotate either from the base of the tooth toward, and then over, the tooth surface; or, from the tooth surface toward, and then over, the base of the tooth.

4. A toothbrush as claimed in claim 2, wherein said brushes are removable.

5. A toothbrush as defined in claim 2, further comprising:

(a) handle means for holding the toothbrush; and,

(b) support means for supporting said brushes to enable positioning of said brushes on opposite sides of the tooth, while maintaining said handle in a level positon.

6. A toothbrush as claimed in claim 5, wherein said handle means has a longitudinal axis and wherein said support means supports said brushes in a location which is offset from said longitudinal axis.

7. A toothbrush as claimed in claim 2 , further comprising guard means for holding the cheeks and tongue away from said rotatable brushes.

8. A toothbrush as claimed in claim 1, wherein said rotatable brushes are cylindrical.

9. A toothbrush as claimed in claim 5, wherein the handle means is removably connected to the support means.

0103959

FIG.1
FIG. 2
FIG. 3
FIG. 4
10
12
14
16
18
20
24a
24b
26
26a
26b
26c
28
30
32
32'
34
36
38
40

12
36
10
28
32
32'
14

FIG. 5

0103959

European Patent Office

# EUROPEAN SEARCH REPORT

Application number

EP 83304336.7

DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US - A - 4 313 237 (SMITH) * Totality * -- | 1,2,4-6,8,9 | A 46 B 13/02 |
| X | US - A - 3 512 202 (TAYLOR) * Totality * -- | 1-3,5-8 | |
| X | GB - A - 962 068 (VERDI) * Totality * -- | 1-4,7-9 | |
| X | US - A - 2 628 377 (COCKRIEL) * Totality * -- | 1,2,5-9 | |
| X | US - A - 1 901 503 (FESSENDEN) * Totality * -- | 1-4,7,8 | TECHNICAL FIELDS SEARCHED (Int. Cl. 3) |
| X | US - A - 2.655 675 (GROVER) * Totality * -- | 1,2,4,5,7-9 | A 46 B 13/00 |
| X | EP - A1 - 0 046 521 (LAZZARI) * Totality * -- | 1-5,7-9 | |
| X | US - A - 2 044 344 (BAGNALL) * Page 1, column 1, lines 4-30; fig. 1,6 * ---- | 1,2,5-9 | |

The present search report has been drawn up for all claims

| Place of search | Date of completion of the search | Examiner |
|---|---|---|
| VIENNA | 28-10-1983 | PIRKER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document